# FASCICULE DE BREVET EUROPEEN

(11) **EP 1 502 790 B1**
(45) Date de publication et mention de la délivrance du brevet: **26.04.2006**
(21) Numéro de dépôt: 04291921.7
(22) Date de dépôt: 28.07.2004
(51) Int. Cl.: B60J 10/02, B60J 10/06, B23P 19/02, B60R 13/06, E06B 7/16, F16J 15/10

(54) **Cellule de pose en continu d'un joint d'étanchéité sur la caisse ou un élément de carrosserie d'un véhicule à moteur par exemple**
Vorrichtung zum fortlaufenden Legen eines Dichtungsprofils, insbesondere auf der Karosserie oder einem Karosserieteil eines Kraftfahrzeugs
System for continuously layingof a sealing strip, especially on the bodywork of a motor vehicle or a bodywork part of it

(30) Priorité: 30.07.2003 FR 0309376
(43) Date de publication de la demande: 02.02.2005
(73) Titulaire: HUTCHINSON, 75008 Paris (FR)
(72) Inventeur: Florentz, Bertrand, 45200 Paucourt (FR); Baratin, Sylvain, 45260 Vieilles Maisons (FR); Drivon, Stéphane, 45410 Chalette sur Loing (FR)
(74) Mandataire: Doireau, Marc

(56) Documents cités:
- EP-A- 0 357 973
- DE-A- 4 041 175
- US-B1- 6 554 040

## Description

L'invention concerne une cellule de pose en continu d'un joint d'étanchéité adhésivé sur la caisse ou un élément de carrosserie d'un véhicule à moteur par exemple.

D'une manière générale, les joints actuellement utilisés en étanchéité de carrosserie peuvent être fixés de plusieurs manières. On peut utiliser des clips de positionnement et/ou de maintien, qui sont rapportés ou intégrés aux joints, des joints présentant une pince rigide ou semi-rigide en forme de U destinée à être chaussée sur la feuillure d'un support de réception, des rails de fixation dans lesquels les joints sont clippés, ou des joints adhésivés qui adhèrent sur le support de réception.

Les joints adhésivés qui se fixent par collage présentent un grand nombre d'avantages parmi lesquels on peut citer : une excellente étanchéité entre le joint et son support de réception, un poids faible, une conception simplifiée qui ne nécessite pas la présence d'éléments rapportés, et une pose automatisable.

La pose d'un joint adhésivé qui a été préalablement muni de son système adhésif, s'effectue à l'heure actuelle à l'aide d'un outillage spécifiquement conçu pour s'adapter à la géométrie du support de réception. Un opérateur saisit le joint, le positionne sur l'outillage de pose et retire le film protecteur ("liner" en langue anglaise) du système adhésif. Ensuite, l'outillage se positionne automatiquement au voisinage du support de réception et y dépose le joint en appliquant sur toute la périphérie du support, pendant quelques secondes, une pression suffisante pour que le système adhésif adhère correctement.

Une telle technologie de pose de joints adhésivés dite de dépose statique présente cependant un certain nombre de limites. Plus précisément, l'outillage d'application du joint adhésivé est spécifique à chaque support de réception, ce qui engendre des investissements lourds ; la multiplication des outillages de pose génère un encombrement de la chaîne de montage, un temps global de montage assez important (temps de pose du joint par l'opérateur sur l'outillage, temps d'approche du support de réception, temps de mise en pression, ...); une mise en pression qui n'est pas optimale sur toute la périphérie du joint ; et une intervention humaine pour monter le joint sur l'outillage spécifique à chaque support de réception.

Récemment, une nouvelle technologie de pose de joints adhésivés dite de pose dynamique est apparue. Selon un premier mode de réalisation, le système est constitué par un robot qui manipule le support de réception du joint pour le présenter devant une tête de pose fixe qui applique le joint adhésivé. La tête de pose intègre plusieurs galets motorisés qui permettent l'avancement du joint, le décollement progressif du film protecteur et la mise en pression du joint contre le support de réception. Le robot déplace le support de réception suivant des mouvements de translation et/ou rotation au fur et à mesure que les galets motorisés de la tête de dépose déroulent et appliquent le joint. Dans le cas d'un joint déposé en continu sur toute la périphérie du support de réception et une fois que le robot a effectué un mouvement de rotation de 360° qui est couplé à des mouvements de translation pour suivre la forme du support de réception, la tête de pose coupe le joint de manière à ce que les deux extrémités du joint soient face à face sans laisser de jeu entre ces deux extrémités. Dans un second mode de réalisation de cette nouvelle technologie, le support de réception est fixe et le robot manipule la tête de pose.

Ces deux systèmes de pose robotisés présentent un grand nombre d'avantages par rapport au cas dit statique, en particulier : la flexibilité du robot qui permet de déposer un joint sur plusieurs types de supports de réception pour une même gamme de véhicules ou sur des véhicules différents ; la possibilité de déposer plusieurs types de joint sur un même support ou sur des supports différents en prévoyant autant de têtes de pose que des références de joints ; le robot peut appliquer une pression locale très forte pour assurer une excellente tenue de l'adhésif ; la possibilité de pouvoir réaliser des joints dits réglables dans le but de compenser des dispersions de fabrication des éléments de carrosserie (emboutissage et ferrage de la caisse et des ouvrants, tolérances de fabrication des vitrages et autres panneaux destinés à recevoir un joint), ce besoin de compenser les dispersions étant très fort pour les constructeurs automobiles pour produire des véhicules aux performances homogènes et ce, même durant les phases de démarrage de nouvelles productions, alors que les outils ne sont pas encore complètement stabilisés ; des investissements réduits de manière importante ; et un temps de dépose fortement réduit.

Un but de l'invention est de perfectionner un outillage de pose dynamique en continu d'un joint adhésivé pour le rendre plus performant, en particulier en prévoyant une alimentation d'un joint stocké en grande longueur sur une bobine ou dans un container par exemple.

Cependant, une telle alimentation du joint n'est pas sans poser des problèmes qui vont être énumérés ci-après.

Un premier problème se rencontre dès lors où le joint adhésivé est percé suivant un pas constant pour que l'air qui est contenu dans le joint puisse s'échapper lors de la fermeture de l'ouvrant, il arrive qu'un trou d'évacuation d'air se retrouve dans une zone à faible rayon de courbure du support de réception du joint. Il en résulte que le joint étant sous contrainte, la présence d'un trou provoque un affaissement plus important du joint avec l'apparition de vrilles, de ridules ou de plis par exemple.

Un deuxième problème se rencontre lorsque le joint présente des trous d'évacuation d'eau qui doivent se situer au niveau d'un bas de caisse ou d'un élément de carrosserie, sachant que le pas entre deux trous est différent et que la longueur globale du joint varie suivant le support considéré.

Un troisième problème se rencontre du fait que le joint d'étanchéité est monté entre une caisse et un ouvrant, et la position du joint doit être telle que l'écrasement du joint soit, si possible, constant pour tous les véhicules produits sur la chaîne de montage.

Un quatrième problème se rencontre lorsque le joint est déposé autour d'un support de réception sous la forme d'un panneau, une porte de voiture par exemple, présentant des coins anguleux, le joint à tendance à s'affaisser dans ces coins. Lorsque les joints sont prédécoupés à longueur, une solution consiste à réaliser une opération préalable de conformation localisée du joint, par thermoformage par exemple, dans la zone du joint qui se retrouvera en vis-à-vis du coin anguleux. Par contre, dans le cas d'un joint de grande longueur enroulé sur une bobine ou stocké dans un conteneur par exemple, il n'est pas possible de réaliser par avance une opération locale de thermoformage du joint.

Un cinquième problème se rencontre du fait que le joint n'étant pas livré bouclé, les extrémités du joint (début et fin de la pose) ne sont pas solidaires l'une de l'autre, ce qui peut se traduire localement par des éventuelles entrées d'eau, de poussière et/ou de bruit dans l'habitacle du véhicule.

Un but de l'invention est de concevoir une cellule de pose d'un joint adhésivé qui puisse prendre en compte tout ou partie des problèmes évoqués précédemment.

A cet effet, l'invention propose une cellule de pose dynamique et en continu d'un joint d'étanchéité adhésivé sur une caisse ou un élément de carrosserie d'un véhicule à moteur par exemple, cette cellule comprenant au moins un poste d'alimentation d'un profilé extrudé avec une partie de fixation adhésivée recouverte d'un film protecteur, une tête automatisée de pose du joint découpé dans le profilé par des moyens de découpe, un robot manipulant soit l'élément de carrosserie autour de la tête automatisée qui est fixe, soit la tête automatisée autour de la caisse ou de l'élément de carrosserie qui est fixe, caractérisée en ce que la cellule de pose comprend au moins des moyens de détection de la présence de trous d'évacuation d'air et/ou d'évacuation d'eau dans le profilé, et/ou des moyens de perçage d'au moins l'un de ces trous dans le profilé:

D'une manière générale, le profilé peut présenter aucun trou d'évacuation d'air ou d'évacuation d'eau, peut présenter que des trous d'évacuation d'air à intervalles réguliers, ou présenter à la fois des trous d'évacuation d'air et d'eau.

Quel que soit le cas envisagé, la cellule est programmée de manière à ce qu'un trou d'évacuation d'air percé ou à percer, et/ou qu'un trou d'évacuation d'eau percé ou à percer, ne se retrouve pas au point de départ de pose du joint sur la caisse ou l'élément de carrosserie, et qu'un trou d'évacuation d'air ne se retrouve pas dans un coin à faible rayon de courbure de la caisse ou de l'élément de carrosserie.

L'invention peut s'appliquer à d'autres domaines que celui de l'industrie automobile, en particulier dans le domaine du bâtiment par exemple.

D'autres avantages, caractéristiques et détails de l'invention ressortiront du complément de description qui va suivre en références aux dessins annexés, donnés à titre d'exemple et dans lesquels :
- la figure 1 est une vue schématique d'un mode de réalisation d'une cellule de pose en continu selon l'invention d'un joint adhésivé, cette cellule comprenant notamment un robot manipulateur et une tête de pose automatisée ;
- la figure 2 est une vue en coupe d'un exemple de joint adhésivé déposé par la cellule de la figure 1 ;
- la figure 3 est une vue de dessus schématique d'un mode de réalisation d'une tête automatisée de pose du joint ;
- la figure 4 est une vue schématique pour illustrer des moyens de chauffage local du profilé dont est issu le joint d'étanchéité ;
- la figure 5 est une vue en perspective d'un organe de préhension porté par le robot manipulateur de la cellule de la figure 1 ;
- la figure 6 est une vue schématique et partielle pour illustrer la pose du joint en prenant en compte le dimensionnement réel entre une porte et la caisse du véhicule moteur ;
- la figure 7 est une vue schématique pour illustrer le principe de fabrication d'un véhicule à moteur avec la cellule de pose en continu selon la figure 1 ;
- la figure 8 est une vue simplifiée d'un autre mode de réalisation d'une cellule dans laquelle un joint est déposé par une tête automatisée mobile autour d'une porte fixe ;
- la figure 9 est une vue simplifiée d'un autre mode de réalisation d'une cellule dans laquelle un joint est déposé sur la caisse d'un véhicule à moteur ; et
- la figure 10 est une vue simplifiée d'un autre mode de réalisation d'une cellule dans laquelle un joint de vitrage est déposé autour d'une vitre.

D'une manière générale, l'invention concerne une cellule de pose dynamique en continu d'un joint d'étanchéité, en particulier un joint adhésivé, sur la caisse ou un élément de carrosserie d'un véhicule à moteur dans le domaine de l'industrie automobile par exemple. Par caisse, il faut globalement entendre le châssis du véhicule à moteur, qui forme une carrosserie et, par élément de carrosserie, il faut entendre un ouvrant tel qu'une porte, mais également un vitrage sur le contour duquel la cellule dépose un joint d'étanchéité.

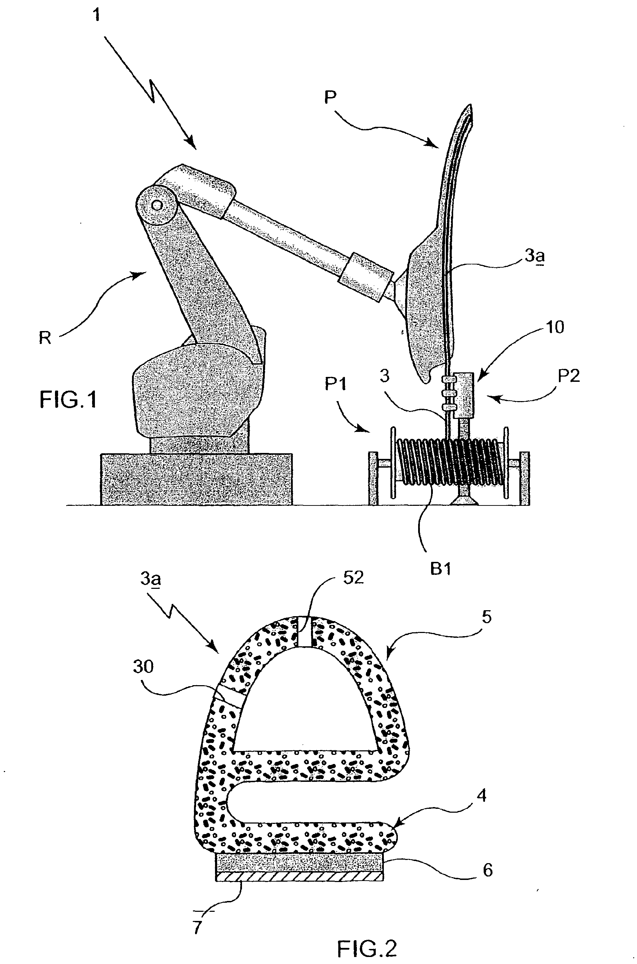

Dans l'exemple de réalisation illustré à la figure 1, la cellule 1 est conçue de manière à déposer en continu un joint d'étanchéité 3a sur le contour d'un élément de carrosserie tel une porte P. Cette cellule 1 comprend notamment un poste d'alimentation P₁ où est stocké sur une grande longueur, sur une bobine B₁ par exemple, un profilé d'étanchéité adhésivé 3, un robot manipulateur R qui se saisit d'une porte P amenée par une balancelle par exemple pour la déplacer devant un poste P₂ de pose fixe comprenant notamment une tête automatisée 10 qui va au moins découper un joint d'étanchéité 3a à longueur dans le profilé 3 tiré depuis le poste d'alimentation P₁ pour le déposer sur la porte mobile P qui est ramenée ensuite sur la balancelle par le robot R.

Sur la figure 2, on a illustré la forme du joint d'étanchéité 3a qui comprend par exemple une partie de fixation 4 sensiblement plane qui est surmontée d'un côté par une partie d'étanchéité tubulaire 5. La face libre de la partie fixation 4 reçoit un système adhésif 6, tel un ruban adhésif double face, qui est revêtu d'un film protecteur 7. Le profilé d'étanchéité 3 est fabriqué par extrusion ou coextrusion d'un ou de plusieurs matériaux élastomères, thermoplastiques ou thermoplastiques élastomères, le système adhésif 6 étant déposé sur le profilé après son extrusion ou coextrusion. Le profilé 3 est ensuite stocké sur une grande longueur sur un support provisoire qui peut être constitué par la bobine B₁ par exemple montée libre en rotation (figure 1).

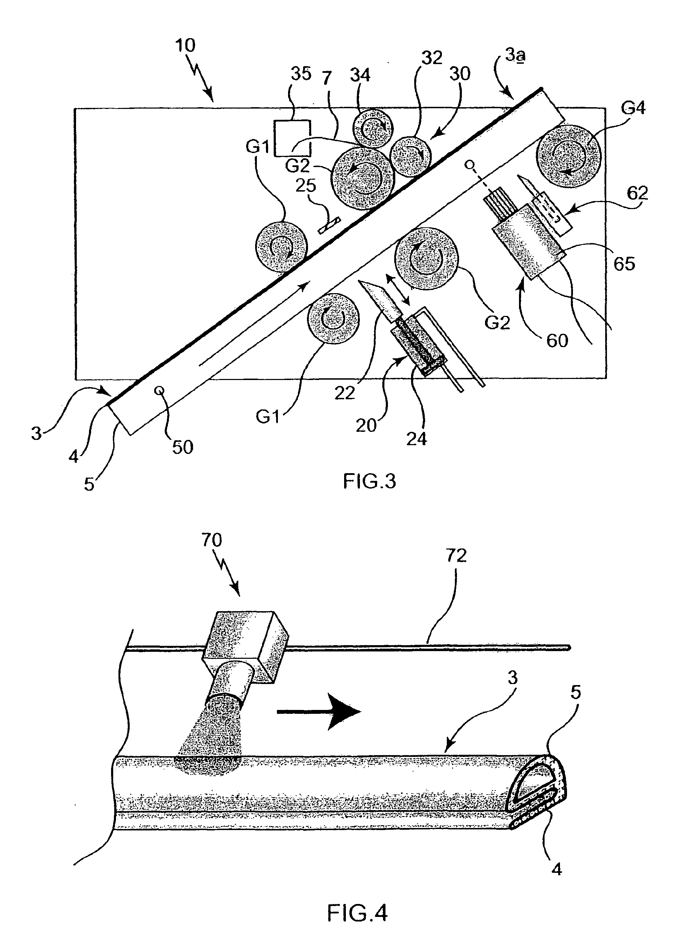

Le poste P₂ de pose fixe des figures 1 et 3 comprend notamment la tête automatisée 10 de pose dynamique d'un joint d'étanchéité 3a qui est déroulé depuis la bobine B1 en étant tiré par au moins deux couples de galets d'entraînement G1 et G2, qui prennent respectivement appui sur la partie de fixation 4 et la partie d'étanchéité 5 du profilé 3. La tête automatisée 10 comprend au moins des moyens de découpe 20 du profilé 3 avec le film protecteur 7 pour couper la longueur du joint d'étanchéité 3a en cours de pose sur la porte P. Ces moyens de découpe 20 sont constitués par un outil de coupe 22 placé d'un côté du profilé 3 et qui peut être supporté par un support 24 mobile en un mouvement de va-et-vient, et qui coopère avec une contre-forme 25 fixe placée de l'autre côté du profilé 3. Les moyens de découpe 20 sont par exemple situés entre les deux couples de galets d'entraînement G1 et G2.

La tête automatisée 10 comprend des moyens de préhension 30 du film protecteur 7 du profilé 3, une fois que le profilé 3 a été découpé à la longueur du joint d'étanchéité 3a en cours de dépose sur la porte P, ou dans le cas d'une découpe locale d'un joint adhésivé sur un vitrage par exemple ayant un film protecteur partiellement ou entièrement découpé. Ces moyens de préhension 30 du film protecteur 7 peuvent être constitués par exemple par un galet gratteur 32 qui roule sur la partie de fixation 4 du profilé 3 et auquel va adhérer le film protecteur 7 après avoir été décollé du profilé 3. Le galet gratteur 32 peut être entraîné par l'un des galets d'entraînement G2 du profilé 3, celui-ci pouvant également entraîner un galet de renvoi 34 du film protecteur 7 vers un réservoir de stockage 35.

La tête automatisée 10 applique le joint d'étanchéité 3a dépourvu de son film protecteur 7 sur la porte P au moyen d'au moins un galet presseur G₄, ce galet étant moteur et fonctionnant en synchronisme avec les galets d'entraînement G₁ et G₂.

D'une manière générale, un joint d'étanchéité déposé sur une caisse ou un élément de carrosserie d'un véhicule à moteur, présente des trous d'évacuation d'air 50 et des trous d'évacuation d'eau 52 qui sont percés dans la partie étanchéité 5 du joint. De tels trous 50 et 52 sont illustrés à la figure 2. Les trous d'évacuation d'air 50 sont percés à intervalles réguliers dans le profilé 3, alors que les trous d'évacuation d'eau 52 ne sont destinés qu'à se retrouver partie basse de la caisse ou de l'élément de carrosserie une fois le joint déposé.

Trois cas vont être envisagés ci-après pour le profilé 3 stocké sur la bobine B₁, à savoir : le profilé 3 ne présente aucun trou d'évacuation d'air et d'évacuation d'eau, le profilé ne présente que des trous d'évacuation d'air, et le profilé présente à la fois des trous d'évacuation d'air et d'évacuation d'eau.

Pour pouvoir gérer ces trois cas, la cellule automatisée 10 comprend des moyens de détection 60 de trous d'évacuation d'air et de trous d'évacuation d'eau, ainsi que des moyens de perçage 62 de ces trous. Les moyens de détection 60 de trous d'évacuation d'air 50 peuvent être constitués par une caméra 65 ou par un faisceau laser par exemple. Les moyens de détection de trous d'évacuation d'eau peuvent être constitués par des moyens similaires à ceux pour la détection des trous d'évacuation d'air et non pas été représentés sur la figure 3. D'une manière générale, les moyens de détection de trous d'évacuation d'eau sont décalés angulairement par rapport aux moyens de détection des trous d'évacuation d'air.

Dans le premier cas d'un profilé sans trous d'évacuation d'air et d'évacuation d'eau, les moyens de détection ne détectent pas la présence de ces trous dans le profilé 3, et les moyens de perçage de ces trous vont être opérationnels en fonction du point de départ de pose du joint 3a sur la caisse ou l'élément de carrosserie. En effet, il faut éviter qu'un trou d'évacuation d'air 50 ne se trouve au point de départ de pose du joint 3a et dans un coin à faible rayon de courbure de la caisse ou de l'élément de carrosserie, et il faut s'assurer qu'un trou d'évacuation d'eau ne se trouve au point de départ de pose du joint et qu'il soit percé dans une zone du joint correspondant au bas de caisse ou de l'élément de carrosserie. Les moyens de perçage 62 des trous sont donc programmés en conséquence, sachant qu'ils peuvent également percer des trous d'évacuation d'air supplémentaires.

Dans le deuxième cas d'un profilé 3 ne présentant que des trous d'évacuation d'air 50, comme cela est illustré sur la figure 3, on peut envisager que la tête automatisée 10 puisse couper une longueur calculée de joint telle que le point de départ de la pose du joint sur la porte P tombe au voisinage immédiat ou sur un trou d'évacuation d'air 50, ou telle qu'un trou d'évacuation d'air 50 va se trouver en vis-à-vis d'un coin anguleux ou à faible rayon de courbure de la porte P. Pour pallier ces inconvénients, les moyens de détection 60 vont détecter la position du premier trou d'évacuation d'air 50 et, en fonction de cette détection, donner ordre soit aux moyens de découpe 20 de procéder à la coupe d'une chute du profilé non récupérable, soit au robot R pour qu'il décale le point de départ de pose du joint 3a. Parallèlement, les moyens de perçage 62 de trous d'évacuation d'eau peuvent être commandés pour percer au moins un trou d'évacuation d'eau 52 en fonction de la position du point de départ de pose et de la longueur du joint 3a pour que ce trou 52 se retrouve dans la partie basse de la caisse ou de l'élément de carrosserie.

Dans le troisième cas d'un profilé 3 présentant des trous d'évacuation d'air et des trous d'évacuation d'eau, les moyens de détection détectent les trous d'évacuation d'air et les moyens de découpe 20 découpent chaque joint d'étanchéité 3a, de manière à ce qu'aucun de ces trous ne se trouve au point de départ de pose du joint 3a, ni dans un coin à faible rayon de courbure de la caisse ou de l'élément de carrosserie.

D'une manière générale, le profilé P présente à intervalles réguliers et d'une manière connue en soi des trous d'évacuation d'air 50 qui sont percés dans sa partie d'étanchéité tubulaire 5. Dans ces conditions, on peut envisager que la tête automatisée 10 puisse couper une longueur calculée de joint telle que le point de départ de la dépose du joint sur la porte P tombe au voisinage immédiat ou sur un trou d'évacuation d'air 50, ou telle qu'un trou d'évacuation d'air 50 va se trouver en vis-à-vis d'un coin anguleux ou à faible rayon de courbure de la porte P. Pour pallier ces inconvénients, un moyen de contrôle 60 peut être prévu pour détecter la position du premier trou d'évacuation d'air 50 et, en fonction de cette détection, donner ordre soit aux moyens de découpe 20 de procéder à la coupe d'une chute du profilé non récupérable, soit au robot R pour qu'il décale le point de départ de dépose du joint 3a. Ce moyen de contrôle 60 peut être constitué par une caméra, un pointeur ou un faisceau laser par exemple.

Comme illustré sur la figure 4, la tête automatisée 10 peut également intégrer des moyens 70 pour chauffer localement le profilé 3 avant son montage pour le conformer d'une manière telle que son affaiblissement soit faible dans un coin à faible rayon de la porte P. D'une manière générale, ces moyens 70 ont pour fonction de réchauffer la partie d'étanchéité 5 du profilé 3, afin de relâcher les contraintes du futur joint dans un coin à faible rayon de courbure de la porte P. Les moyens de chauffage 70 peuvent être constitués par de l'air chaud, une source IR ou micro-ondes par exemple, sachant que ces moyens peuvent être fixes ou se déplacer sur un rail 72 à la vitesse de déroulement du profilé 3 pour augmenter le temps de chauffe.

La cellule de pose 1 peut également intégrer des moyens pour assurer un soudage bord à bord des deux extrémités d'un joint, afin que ces deux extrémités soient solidarisées l'un à l'autre en évitant ainsi des entrées potentielles d'eau, de poussières ou de bruit dans l'habitacle du véhicule. Ces moyens peuvent faire intervenir l'utilisation d'un film PE par exemple.

La cellule de pose peut intégrer des moyens pour raccorder l'extrémité d'une longueur de profilé stockée sur une bobine avec l'extrémité d'une autre longueur de profilé stockée sur une autre bobine, pour réduire les interventions humaines dans l'alimentation de la tête automatisée. Ces moyens peuvent se présenter sous la forme d'un système de soudage par lame chauffante avec ou sans apport de matière. Dans le cas d'un joint en élastomère, la matière d'apport pourra être un élastomère, un élastomère thermoplastique ou un thermoplastique, alors que dans le cas d'un joint en un élastomère thermoplastique ou en thermoplastique, il est possible de ne pas recourir à un apport de matière.

D'une manière générale, tout joint d'étanchéité sur une caisse ou un élément de carrosserie doit être déposé avec le plus de précision possible, et il apparaît nécessaire de prévoir des moyens à cet effet.

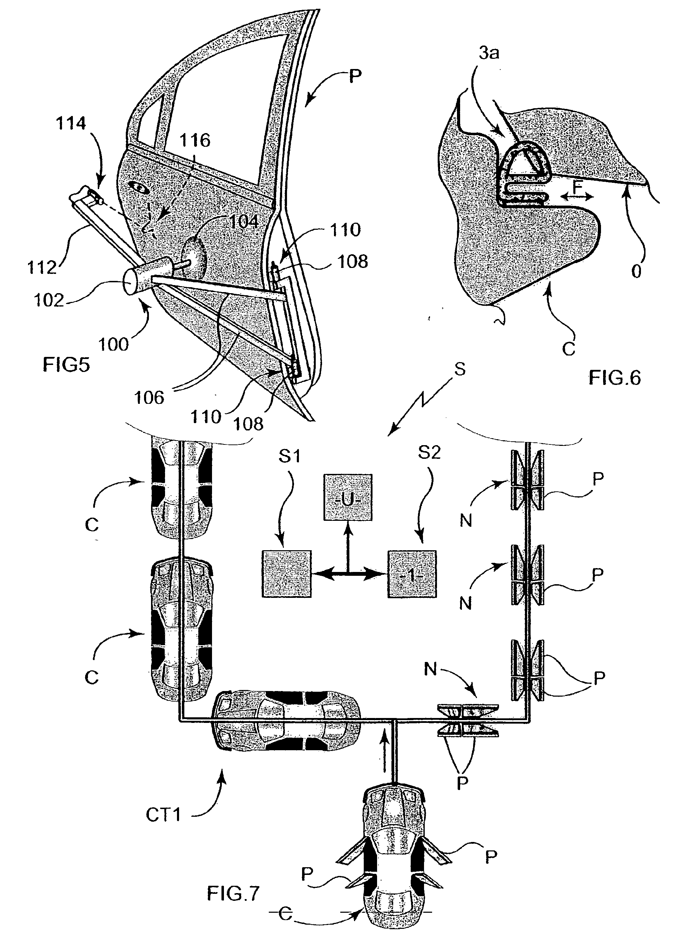

En référence à la figure 5, le robot manipulateur R de la porte P peut la saisir par l'intermédiaire d'un dispositif de préhension 100 qui présente un corps 102 solidaire du robot R et qui se termine par une ventouse 104 apte à se fixer sur la porte P. Le corps 102 se prolonge latéralement et d'un côté par un support comprenant deux bras 106 dont les extrémités libres comprennent respectivement deux tétons 108 aptes à venir en prise avec deux charnières d'articulation 110 de la porte P par exemple. Le corps 102 se prolonge latéralement et de l'autre côté par un bras 112 dont l'extrémité libre supporte un capteur de repérage précis 114, par voie optique par exemple, de la gâche 116 de la porte P. Chaque porte P est ainsi prise par le robot R dans une même position de référence.

D'une manière générale, le joint d'étanchéité est monté entre une caisse et un ouvrant, et la position du joint sur la caisse ou sur l'ouvrant doit être telle que l'écrasement du joint soit constant pour tous les véhicules produits sur la chaîne de montage. A cet effet, selon l'invention, on calcule le dimensionnel réel dit entrefer existant entre la caisse C et l'ouvrant O en deux zones par exemple, de manière à décaler éventuellement la position de fixation du joint d'étanchéité 3a selon la flèche F pour tenir compte des dispersions de fabrication de l'ouvrant O et la caisse C qui peuvent varier d'un véhicule à l'autre (figure 6).

Par ailleurs, dans une chaîne de fabrication d'un véhicule à moteur, les caisses équipées de leurs portes passent par un poste de peinture, puis la chaîne se sépare en deux pour former une chaîne de transport CT₁ des caisses C, et une chaîne de transport CT₂ des portes P prélevées des caisses C et véhiculées par des nacelles N par exemple, comme cela est schématisé sur la figure 7. Pour mesurer le dimensionnel réel existant entre une caisse C et une porte P, la cellule 1 selon l'invention peut comprendre un système de commande et de contrôle S qui peut se scinder en un premier sous-système S₁ qui contrôle la caisse C, et en un second sous-système S₂ qui assure la pose d'un joint 3a sur une porte P et qui intègre la cellule 1 de pose, ces deux sous-systèmes S₁ et S₂ étant pilotés par une unité de commande et de contrôle U. Chaque sous-système de contrôle S₁ et S₂ peut être une vision par caméra, un système de faisceau/pointeur laser ou encore un système de contrôle bi ou tridimensionnel par palpage, et il pourra soit s'indexer en continu sur l'intégralité du support du joint, soit ne s'indexer avantageusement que sur un nombre de points clés, comme par exemple la position des charnières, de la gâche, d'un coin supérieur de la porte et/ou d'un montant sur porte supportant une vitre fixe ou un rétroviseur par exemple. A partir des informations mesurées, l'unité de commande et de contrôle U pourra faire modifier la trajectoire de pose du joint 3a sur la porte P. Bien entendu, les deux sous-systèmes S₁ et S₂ sont inversés lorsque la pose du joint s'effectue sur les caisses C.

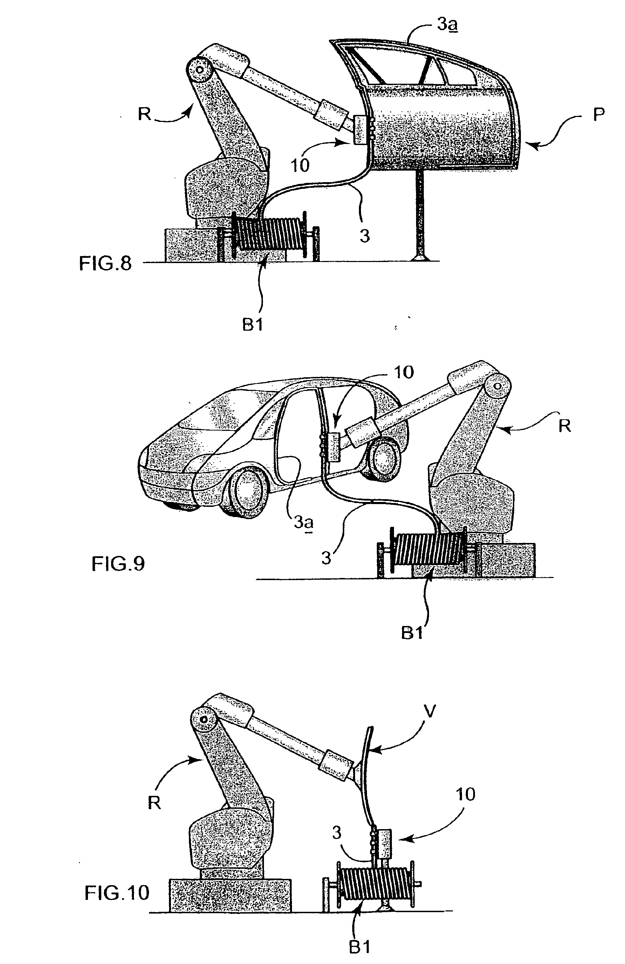

Sur les figures 8 à 10, on a illustré schématiquement des variantes de réalisation de la cellule de pose illustrée à la figure 1.

Dans le cas de la figure 8, la tête automatisée 10 est portée par le robot manipulateur R qui la déplace le long du contour d'une porte P maintenue fixe. Dans le cas de la figure 9, le robot R supporte la tête automatisée 10 et dépose le joint 3a sur le contour de la caisse fixe qui recevra ensuite sa porte P. Dans le cas de la figure 10, l'élément supporté par le robot R est une vitre V sur laquelle la tête automatisée fixe 10 dépose un joint.

## Revendications

1. Cellule de pose dynamique et en continu d'un joint d'étanchéité adhésivé (3a) sur une caisse ou un élément de carrosserie d'un véhicule à moteur par exemple, cette cellule (1) comprenant au moins un poste d'alimentation (P₁) d'un profilé extrudé (3) avec une partie de fixation (4) adhésivée et recouverte d'un film protecteur (7), une tête automatisée de dépose (10) du joint (3a) découpé dans le profilé (3) par des moyens de découpe (20), un robot (R) manipulant soit l'élément de carrosserie autour de la tête automatisée qui est fixe, soit la tête automatisée autour de la caisse ou de l'élément de carrosserie qui est fixe, **caractérisée en ce que** la cellule de pose (1) comprend au moins des moyens de détection (60) de la présence de trous d'évacuation d'air (60) et/ou d'évacuation d'eau (52) dans le profilé (3), et/ou des moyens de perçage (62) d'au moins l'un de ces trous dans le profilé (3).

2. Cellule de pose selon la revendication 1, dans laquelle les moyens de détection (60) détectent la présence d'un trou d'évacuation d'air (50), et commandent le robot (R) pour qu'il décale le point de départ de pose du joint (3a) sur la caisse ou sur l'élément de carrosserie pour éviter la présence d'un trou d'évacuation d'air (50) au départ de la pose du joint ou dans un coin à faible rayon de courbure de la caisse ou de l'élément de carrosserie.

3. Cellule de pose selon la revendication 1, dans laquelle les moyens de détection (60) détectent la présence d'un trou d'évacuation d'air (50), et commandent les moyens de découpe (62) pour couper une chute dans le profilé pour éviter la présence d'un trou d'évacuation d'air (50) au point de départ de pose du joint sur la caisse ou sur l'élément de carrosserie ou dans un coin à faible rayon de courbure de la caisse ou de l'élément de carrosserie.

4. Cellule de pose selon l'une des revendications précédentes, dans laquelle les moyens de détection (60) détectent la présence d'un trou d'évacuation d'air (50), et commandent les moyens de perçage (62) pour percer au moins un trou d'évacuation d'air supplémentaire dans le profilé (3).

5. Cellule de pose selon la revendication 1, dans laquelle les moyens de détection (60) ne détectent pas la présence d'un trou d'évacuation d'air (50), et commandent les moyens de perçage (62) pour percer au moins un trou d'évacuation d'air dans le profilé.

6. Cellule de pose selon l'une des revendications précédentes, dans laquelle des moyens de perçage (62) percent des trous d'évacuation d'eau (52) dans le joint.

7. Cellule de pose selon les revendications 1 à 6, dans laquelle les moyens de contrôle (60) pour détecter la position des trous d'évacuation d'air (50) et/ou d'évacuation d'eau (52) dans le profilé (3) sont constitués par une caméra, un pointeur, un faisceau laser ou analogue.

8. Cellule de pose selon l'une quelconque des revendications précédentes, dans laquelle, lorsque le robot (R) manipule un élément de carrosserie (P) par rapport à une tête automatisée fixe (10), la cellule (1) comprend des moyens (100) pour indexer l'élément de carrosserie (P) sur des points clés de celui-ci, lesdits moyens (100) étant constitués par un élément de préhension (100) solidaire du robot (R) qui vient saisir l'élément de carrosserie au niveau de ses points clés.

9. Cellule de pose selon la revendication 8, dans laquelle les points clés de l'élément de carrosserie tel une porte (P) sont constitués par les charnières d'articulation (102) et la gâche (104) de la porte (P).

10. Cellule de pose selon l'une des revendications précédentes, dans laquelle la cellule comprend des moyens (70) pour chauffer au moins localement le profilé (3) sont constitués par une source de chaleur fixe ou déplaçable sur un rail (72) à la vitesse de déroulement du profilé (3).

11. Cellule de pose selon l'une des revendications précédentes, dans laquelle sont prévus des moyens pour souder bord à bord les deux extrémités du joint (3a) déposé sur la caisse ou l'élément de carrosserie.

12. Cellule de pose selon la revendication 11, dans laquelle lesdits moyens interposent un film de polyéthylène entre les deux extrémités du joint (3a).

13. Cellule de pose selon l'une des revendications précédentes, dans laquelle des moyens sont prévus pour raccorder l'une à l'autre deux extrémités de deux profilés (3) stockés sur deux supports différents.

## Patentansprüche

1. Vorrichtung zur dynamischen und fortlaufenden Verlegung einer klebbaren Dichtung (3a) insbesondere auf einer Karosserie oder einem Karosserieteil eines Kraftfahrzeugs, wobei diese Vorrichtung (1) mindestens aufweist: eine Zuführeinrichtung (P₁) für ein extrudiertes Profil (3) mit einem klebbaren und mit einem Schutzfilm (7) bedeckten Befestigungsabschnitt (4); einen automatisierten Verlegekopf (10) für die in dem Profil (3) durch Schneidemittel (20) geschnittene Dichtung (3a); einen Roboter (R), welcher entweder das Teil der Karosserie um den feststehenden automatisierten Kopf herum oder den automatisierten Kopf um die feststehende Karosserie oder das feststehende Karosserieteil herum handhabt, **dadurch gekennzeichnet, dass** die Vorrichtung (1) zur Verlegung zumindest Abtastmittel (60) für das Vorhandensein von Entlüftungslöchern (50) und/oder Entwässerungslöchern (52) in dem Profil (3) und/oder Perforationsmittel (62) für zumindest eines dieser Löcher in dem Profil (3) aufweist.

2. Vorrichtung zur Verlegung nach Anspruch 1, wobei die Abtastmittel (60) das Vorhandensein eines Entlüftungslochs (50) detektieren und den Roboter (R) so steuern, dass er den Startpunkt zur Verlegung der Dichtung (3a) auf der Karosserie oder dem Karosserieteil dergestalt versetzt, dass ein Vorhandensein eines Entlüftungslochs (50) am Anfang der Verlegung der Dichtung oder in einer Ecke der Karosserie mit einem geringen Krümmungsradius oder des Karosserieteils verhindert ist.

3. Vorrichtung zur Verlegung nach Anspruch 1, wobei die Abtastmittel (60) das Vorhandensein eines Entlüftungslochs (50) detektieren und die Schneidemittel (20) so zum Abschneiden eines Abfallstücks steuern, dass ein Vorhandensein eines Entlüftungslochs (50) am Anfangspunkt der Verlegung der Dichtung oder in einer Ecke der Karosserie mit einem geringen Krümmungsradius oder des Karosserieteils verhindert ist.

4. Vorrichtung zur Verlegung nach einem der vorhergehenden Ansprüche, wobei die Abtastmittel (60) das Vorhandensein eines Entlüftungslochs (50) detektieren und die Perforationsmittel (62) zur Perforation des Profils (3) mit zumindest einem zusätzlichen Entlüftungsloch steuern.

5. Vorrichtung zur Verlegung nach Anspruch 1, wobei die Abtastmittel (60) kein Vorhandensein eines Entlüftungslochs (50) detektieren und die Perforationsmittel (62) zur Perforation des Profils mit zumindest einem zusätzlichen Entlüftungslochs steuern.

6. Vorrichtung zur Verlegung nach Anspruch 1, wobei die Perforationsmittel (62) eine Perforation der Dichtung mit Entwässerungslöchern (52) vornehmen.

7. Vorrichtung zur Verlegung nach den Ansprüchen 1 bis 6, wobei die Steuerungsmittel (60) zur Abtastung der Position der Entlüftungslöcher (50) und/oder Entwässerungslöcher (52) in dem Profil (3) aus einer Kamera, einem Pointer, einem Laserstrahl oder Analogem bestehen.

8. Vorrichtung zur Verlegung nach einem der vorhergehenden Ansprüche, wobei, wenn der Roboter (R) ein Karosserieteil (P) in Bezug auf einen feststehenden automatisierten Kopf (10) handhabt, die Vorrichtung (1) Mittel (100) zur Indexierung des Karosserieteils (P) auf den Schlüsselpunkten desselben aufweist, wobei diese Mittel (100) aus einem mit dem Roboter (R) verbundenen Greifelement (100) bestehen, welches das Karosserieteil auf der Höhe seiner Schlüsselpunkte ergreift.

9. Vorrichtung nach Anspruch 8, wobei die Schlüsselpunkte des Karosserieteils im Fall einer Tür (P) aus den Gelenkscharnieren (110) und dem Schließhaken (116) der Tür (P) bestehen.

10. Vorrichtung zur Verlegung nach einem der vorhergehenden Ansprüche, wobei die Vorrichtung Mittel (70) zur Erwärmung des Profils (3) in zumindest lokaler Weise aufweist, welche aus einer feststehenden oder auf einer Schiene (72) mit der Geschwindigkeit des Ablaufs des Profils (3) verstellbaren Wärmequelle bestehen.

11. Vorrichtung zur Verlegung nach einem der vorhergehenden Ansprüche, wobei Schweißmittel zur stumpfen Verschweißung der beiden Enden der Dichtung (3a) vorgesehen sind, die auf der Karosserie oder dem Karosserieteil aufgebracht ist.

12. Vorrichtung zur Verlegung nach Anspruch 11, wobei die Mittel einen Film aus Polyethylen zwischen die beiden Enden der Dichtungen (3a) einbringen.

13. Vorrichtung zur Verlegung nach einem der vorhergehenden Ansprüche, wobei Mittel zur Verbindung des einen Endes mit dem anderen Ende von zwei auf zwei unterschiedlichen Trägern gelagerten Profilen (3) vorgesehen sind.

## Claims

1. Unit for dynamically and continuously fitting a sealing strip (3a) with an adhesive coating to a body or a bodywork element of a motor vehicle, for example, this unit having at least one feeder station (P₁) for an extruded section (3) with an adhesive-coated fixing part (4) covered by a protective film (7), an automated applicator head (10) for fitting the strip (3a) cut in the section (3) by cutting means (20), a robot (R) which either manipulates the bodywork element around the automated head, which is stationary, or manipulates the automated head around the body or bodywork element, which is stationary, **characterised in that** the fitting unit (1) at least has means (60) for detecting the presence of air venting holes (50) and/or water evacuation holes (52) in the section (3), and/or means (62) for piercing at least one of these holes in the section (3).

2. Fitting unit as claimed in claim 1, in which the detection means (60) detect the presence of an air venting hole (50) and command the robot (R) to offset the starting point for fitting the strip (3a) on the body or bodywork element in order to avoid the presence of an air venting hole (50) at the start of fitting the strip or in a corner of the body or body work element with a low radius of curvature.

3. Fitting unit as claimed in claim 1, in which the detection means (60) detect the presence of an air venting hole (50) and command the cutting means (62) to trim and discard a piece of the section in order to avoid the presence of an air venting hole (50) at the starting point for fitting the strip on the body or bodywork element or in a corner of the body or bodywork element with a low radius of curvature.

4. Fitting unit as claimed in one of the preceding claims, in which the detection means (60) detect the presence of an air venting hole (50) and command the piercing means (62) to pierce at least one additional air venting hole in the section (3).

5. Fitting unit as claimed in claim 1, in which the detection means (60) do not detect the presence of an air venting hole (60) and command the piercing means (62) to pierce at least one air venting hole in the section.

6. Fitting unit as claimed in one of the preceding claims, in which the piercing means (62) pierce water evacuation holes (52) in the strip.

7. Fitting unit as claimed in claims 1 to 6, in which the control means (60) for detecting the position of air venting holes (50) and/or water evacuation holes (52) in the section (3) are a camera, a pointer, a laser beam or similar.

8. Fitting unit as claimed in one of the preceding claims, in which, when the robot (R) is manipulating a bodywork element (P) relative to a stationary automated head (10), the unit (1) has means (100) for indexing the bodywork element (P) at key points thereof, said means (100) being a gripping element (100) joined to the robot (R), which picks up the bodywork element on a level with its key points.

9. Fitting unit as claimed in claim 8, in which the key points of the bodywork element such as a door (P) are the hinges (102) and the striking plate (104) of the door (P).

10. Fitting unit as claimed in one of the preceding claims, in which the unit has means (70) for heating the section (3) at least locally, comprising a heat source which is stationary or displaceable on a rail (72) at the speed at which the section (3) is unreeled.

11. Fitting unit as claimed in one of the preceding claims, in which means are provided for welding edge to edge the two ends of the strip (3a) applied to the body or bodywork element.

12. Fitting unit as claimed in claim 11, in which said means interpose a polyethylene film between the two ends of the strip (3a).

13. Fitting unit as claimed in one of the preceding claims, in which means are provided for joining to one another two ends of two sections (3) stored on two different supports.
